# EUROPEAN PATENT SPECIFICATION

(11) **EP 3 097 167 B1**
(45) Date of publication and mention of the grant of the patent: **19.06.2019**
(21) Application number: 15700666.9
(22) Date of filing: 15.01.2015
(51) Int. Cl.: C10M 145/14, C08L 33/08, C08L 33/10, C10N 30/02, C10N 30/08, C10N 40/25, C08F 220/18, C08L 33/06

(54) **POUR POINT DEPRESSANTS FOR IMPROVING THE LOW-TEMPERATURE VISCOSITY OF AGED LUBRICATING OIL**
FLIESSPUNKTDEPRESSOR ZUR VERBESSERUNG DER NIEDRIGTEMPERATURVISKOSITÄT VON GEALTERTEM SCHMIERÖL
AMÉLIORANTS DU POINT D'ÉCOULEMENT POUR AMÉLIORER LA VISCOSITÉ À BASSE TEMPÉRATURE DE L'HUILE LUBRIFIANTE VIEILLIE

(30) Priority: 21.01.2014 US 201461929534 P; 31.01.2014 EP 14153359
(43) Date of publication of application: 30.11.2016
(73) Proprietor: Evonik Oil Additives GmbH, 64293 Darmstadt (DE)
(72) Inventor: SOUCHIK, Joan, Blue Bell, Pennsylvania 19422 (US); FLANAGAN, Aileen T., Abington, Pennsylvania 19040 (US); HUTCHINSON, Philip Andrew, Whitehaven Cumbria CA28 6JZ (GB); WANG, Jen-Lung, Villanova, Pennsylvania 19085 (US); TSAY, Shang-Jih, Ambler, Pennsylvania 19002 (US)
(74) Representative: Evonik Patent Association
(86) International application number: PCT/EP2015/050631
(87) International publication number: WO 2015/110340

(56) References cited:
- WO-A1-2012/056022

## Description

The present invention relates to compositions for use as lubricating oil additives. The additive compositions comprise a mixture of alkyl (meth)acrylate copolymers, having distinct monomeric compositions. The additive compositions disclosed herein can be used to improve the low-temperature pumpability of aged lubricating oil, particularly diesel engine oil aged in the presence of biodiesel.

The temperature dependent viscosity properties of lubricating oil are greatly influenced by the crystallization of paraffinic components at low temperature. This crystallization leads to the formation of so-called waxy structures, which significantly reduce the fluidity of the lubricating oil. Pour point depressants (PPDs) have been developed to maintain fluidity of lubricating oil at low temperatures by inhibiting the formation of waxy structures in the oil.

Historically, the effectiveness of PPDs has been quantified by determining the temperature just before which a lubricating oil becomes unable to flow (the pour point). PPDs were therefore traditionally selected on the basis of their ability to lower the pour point. The pour point, however, is not the only indicator of a lubricating oil's low-temperature performance. For engine oil, the low-temperature high-shear rate viscosity is a measure for the effect that an engine oil has on the startability of an engine due to the viscosity of the oil film on the engine crankshaft. This property can be measured by ASTM D5293, the Cold Cranking Simulator (CCS) test. Another important performance indicator for engine oil is the oil's pumpability at low temperature as determined according to ASTM D4684. The pumpability is measured in terms of the low-shear rate viscosity and the yield stress. Both parameters are determined by a Mini Rotary Viscometer (MRV) using a standardized cooling profile (TP-1), according to which the oil is cooled from -5 to - 40°C at a rate as described in ASTM D4684. The oil pumpability according to ASTM D4684 is also included as an important requirement in the international engine oil standard SAE J300.

Oil, which passes pumpability requirements as fresh oil, can still give pumpability failures when the oil has been oxidized during its long-term use in an engine. This oxidization is also referred to as aging. Low temperature pumpability failures can occur for other reasons. One such known cause is the contamination of the engine oil with biodiesel fuel. It has been found that aging and or contamination may increase the oil's yield stress and low-shear rate viscosity, whereas other properties such as the high-shear rate viscosity and the kinematic viscosity do not necessarily change significantly with aging. Due to the increase in yield stress and low-shear viscosity, aging is detrimental to engine operability. Therefore, used oil pumpability limits are included in the ILSAC GF-4 and the current GF-5 engine oil specifications.

The use of PPDs aims at improving these viscosity properties. However, the use of PPDs is complicated by the fact that lubricating oils derived from different sources contain different types of waxy or paraffinic components. Therefore, the effect of PPDs on low-temperature viscosity depends both on the PPD and the nature of the lubricating oil. In addition, the effect a certain PPD has on the pour point does not always correlate with its effect on other low-temperature properties of the oil. Thus a PPD that reduces the pour point might only have little effect on, for example, the low-shear rate viscosity and the yield stress at low temperature. Further, PPDs that are suitable to improve the low-temperature viscosity of fresh oil do not always perform similarly in aged or fuel contaminated oil. Finally, an additional challenge lies in the fact that lubricating oils commonly contain additional additives such as detergent inhibitor packages (DI packages) and viscosity index improvers (VI improvers), and that these additives may also affect PPD performance. A careful selection of PPD compositions is therefore often necessary.

PPDs for use in lubricating oils are commonly formulated on the basis of alkyl (meth)acrylate polymers. For example, US 4,867,894 discloses that copolymers of a mixture of branched and linear alkyl (meth)acrylates of different alkyl chain length can be used as oil additives to lower the pour point. US 2,655,479 discloses PPDs based on a mixture of two different alkyl (meth)acrylate copolymers, where the two copolymers differ in the average alkyl chain length. US 4,968,444 relates to a mixture of two alkyl (meth)acrylate copolymers, each comprising different relative amounts of short- and long-chain alkyl (meth)acrylates. US 5,043,087 relates to PPDs comprising a blend of two alkyl (meth)acrylate copolymers, where the first copolymer consists of a mixture of branched and linear alkyl (meth)acrylates, and the second copolymer is composed of linear alkyl (meth)acrylates only. US 8,163,683 B2 provides PPDs for lowering the pour point of solvent refined base oils and high viscosity index base oils, where the PPDs comprise a mixture of two different alkyl (meth)acrylate copolymers having different average alkyl chain lengths. US 6,458,749 B2 describes a method for improving the low-temperature fluidity of lubricating oil compositions based on the addition of a mixture of selected high and low molecular weight alkyl (meth)acrylate copolymers. WO 2012/056022 A1 discloses the use of a pour point depressant based on a single alkyl (meth)acrylate copolymer to improve the cold start performance of an aged diesel motor oil.

These examples from the prior art mostly focus on improving the pour point of fresh engine oil. The problem of an aging-induced increase of other viscometric properties, such as low-temperature pumpability, has not been sufficiently addressed so far. The present invention therefore aims at providing PPDs on the basis of alkyl (meth)acrylate polymers suitable for improving low-temperature pumpability of aged lubricating oil, particularly engine oil aged in the presence of biodiesel. Further, the PPDs provided by the present invention should allow improving the low-temperature performance of a wide range of lubricating oil compositions, where the lubricating oil compositions may include different types of DI packages and VI improvers.

It has been found that a composition of two alkyl (meth)acrylate copolymers, each composed of distinct relative amounts of alkyl (meth)acrylates of different alkyl chain length, can be used as an additive for lubricating oil to prevent an aging-induced increase of the low-temperature low-shear rate viscosity and the yield stress according to ASTM D4684. Thereby the composition allows maintaining the low-temperature pumpability of aged lubricating oil, in particular engine oil aged in the presence of biodiesel.

A first aspect of the present invention therefore relates to a composition for use as a lubricating oil additive comprising two alkyl (meth)acrylate copolymers, characterized in that
the composition comprises 30 to 90 % by weight of the first copolymer and 10 to 70 % by weight of the second copolymer, based on the total weight of the composition, the first copolymer comprises
35 to 60 % by weight, based on the total weight of the copolymer, monomer units selected from one or more C7 to C15 alkyl (meth)acrylates, and less than 4 % by weight, based on the total weight of the copolymer, monomer units selected from one or more C1 to C6 alkyl (meth)acrylates; and the second copolymer comprises
more than 60 % by weight, based on the total weight of the copolymer, monomer units selected from one or more C7 to C15 alkyl (meth)acrylates,
at least 5 % by weight, based on the total weight of the copolymer, monomer units selected from one or more C16 to C24 alkyl (meth)acrylates, and less than 4 % by weight, based on the total weight of the copolymer, monomer units selected from one or more C1 to C6 alkyl (meth)acrylates.

As used herein, the term "(meth)acrylate" refers to esters of acrylic and methacrylic acid, and to mixtures thereof. The term "alkyl (meth)acrylate" refers to esters of (meth)acrylic acid and aliphatic alcohols. The alkyl (meth)acrylates described herein are characterized by the number of carbon atoms in the alkyl chain derived from the alcohol.

The copolymers described herein are prepared by radical polymerization of ethylenically unsaturated monomers, in particular (meth)acrylates. The term "copolymer" refers to a polymer composed of a heterogeneous mixture of monomer units, containing two or more monomer types. Unless otherwise noted, the relative amounts of monomer units are given in % by weight based on the total weight of the copolymer.

Providing a mixture of two copolymers, wherein the first copolymer comprises 35 to 60 % by weight C7 to C15 alkyl (meth)acrylates, whereas the second copolymer comprises a higher amount of C7 to C15 alkyl (meth)acrylates of more than 60 % by weight, has been found to be critical for achieving a good low-temperature pumpability in aged lubricating oil.

It is particularly advantageous, if both copolymers comprise monomer units selected from C16 to C24 alkyl (meth)acrylates in combination with monomer units selected from C7 to C15 alkyl (meth)acrylates. In a preferred embodiment, the first copolymer therefore comprises 40 to 65 % by weight monomer units selected from one or more C16 to C24 alkyl (meth)acrylates.

For the same reason, the second copolymer preferably comprises
61 to 95 % by weight monomer units selected from one or more C7 to C15 alkyl (meth)acrylates,
5 to 39 % by weight monomer units selected from one or more C16 to C24 alkyl (meth)acrylates, and
less than 4 % by weight monomer units selected from one or more C1 to C6 alkyl (meth)acrylates.

Examples of the C1 to C6 alkyl (meth)acrylate monomer, where the alkyl group contains from 1 to 6 carbon atoms (also called the "low-cut" alkyl (meth)acrylates), are methyl methacrylate (MMA), methyl and ethyl acrylate, propyl methacrylate, butyl methacrylate (BMA) and acrylate (BA), isobutyl methacrylate (IBMA), hexyl and cyclohexyl methacrylate, cyclohexyl acrylate and combinations thereof.

It has further been found that by restricting the amount of C1 to C6 alkyl (meth)acrylate monomer units to less than 4 % by weight based on the total weight of the copolymer, copolymers can be prepared that have the desired effect on low-temperature pumpability of aged lubricating oil. It is therefore particularly preferred that the copolymers of the present invention comprise less than 1 % by weight C1 to C6 alkyl (meth)acrylate, most preferably zero % by weight. In another preferred embodiment, the copolymers of the present invention comprise less than 1 % by weight methyl (meth)acrylate, more preferably less than 0.1 % by weight.

Examples of the C7 to C15 alkyl (meth)acrylate monomer, where the alkyl group contains from 7 to 15 carbon atoms (also called the "mid-cut" alkyl (meth)acrylates), are 2-ethylhexyl acrylate (EHA), 2-ethylhexyl methacrylate, octyl methacrylate, nonyl methacrylate, decyl methacrylate, isodecyl methacrylate (IDMA, based on branched (C10)alkyl isomer mixture), undecyl methacrylate, dodecyl methacrylate (also known as lauryl methacrylate), tridecyl methacrylate, tetradecyl methacrylate (also known as myristyl methacrylate), pentadecyl methacrylate and combinations thereof. Also useful are: dodecyl-pentadecyl methacrylate (DPMA), a mixture of linear and branched isomers of dodecyl, tridecyl, tetradecyl and pentadecyl methacrylates; decyl-octyl methacrylate (DOMA), a mixture of decyl and octyl methacrylates; nonyl-undecyl methacrylate (NUMA), a mixture of nonyl, decyl and undecyl methacrylates; and lauryl-myristyl methacrylate (LMA), a mixture of dodecyl and tetradecyl methacrylates.

Examples of the C16 to C24 alkyl (meth)acrylate monomer, where the alkyl group contains from 16 to 24 carbon atoms (also called the "high-cut" alkyl (meth)acrylates), are hexadecyl methacrylate (also known as cetyl methacrylate), heptadecyl methacrylate, octadecyl methacrylate (also known as stearyl methacrylate), nonadecyl methacrylate, eicosyl methacrylate, behenyl methacrylate and combinations thereof. Also useful are: cetyl-eicosyl methacrylate (CEMA), a mixture of hexadecyl, octadecyl, and eicosyl methacrylate; and cetyl-stearyl methacrylate (SMA), a mixture of hexadecyl and octadecyl methacrylate.

The mid-cut and high-cut alkyl (meth)acrylate monomers described above are generally prepared by standard esterification procedures using technical grades of long chain aliphatic alcohols. These commercially available alcohols are mixtures of alcohols of varying chain lengths, preferably containing between about 10 and 15 or between about 16 and 20 carbon atoms in the alkyl group. Consequently, for the purposes of this invention, alkyl (meth)acrylate is intended to include not only the individual alkyl (meth)acrylate product named, but also to include mixtures of the alkyl (meth)acrylates with a predominant amount of the particular alkyl (meth)acrylate named. The use of these commercially available alcohol mixtures to prepare (meth)acrylate esters results in the DOMA, NUMA, LMA, DPMA, SMA and CEMA monomer types described above.

In a preferred embodiment, the C7 to C15 alkyl (meth)acrylates are selected from the group consisting of dodecyl-pentadecyl methacrylate (DPMA), decyl-octyl methacrylate (DOMA), nonyl-undecyl methaylate (NUMA), and lauryl-myristyl methacrylate (LMA); and the C16 to C24 alkyl (meth)acrylates are selected from the group consisting of cetyl-eicosyl methacrylate (CEMA), and cetyl-stearyl methacrylate (SMA).

Typically, the amount of C7-C15 alkyl (meth)acrylate monomer units in the first copolymer is from 35 to 60 %, preferably from 35 to less than 60% and more preferably from 40 to 55 %, based on total first copolymer weight. Typically, the amount of C7-C15 alkyl (meth)acrylate monomer units in the second copolymer is from more than 60 to 95 %, preferably from 70 to 95 % and more preferably from 75 to 95 %, based on total second copolymer weight. Preferred C7-C15 alkyl (meth)acrylate monomers useful in the preparation of the copolymers include, for example, isodecyl methacrylate, lauryl-myristyl methacrylate (LMA) and dodecyl-pentadecyl methacrylate (DPMA).

Preferably, the amount of C16-C24 alkyl (meth)acrylate monomer units in the first copolymer is from 40 to 65 %, more preferably from more than 40 to 65 % and most preferably from 45 to 60 %, based on total first copolymer weight. Typically, the amount of C16-C24 alkyl (meth)acrylate monomer units in the second copolymer is from 5 to less than 40 %, preferably from 5 to 30 % and more preferably from 5 to 25 %, based on total second copolymer weight. Preferred C16-C24 alkyl (meth)acrylate monomers useful in the preparation of the copolymers include, for example, cetyl-eicosyl methacrylate (CEMA) and cetyl-stearyl methacrylate (SMA).

Among the mid-cut alkyl (meth)acrylates, C10 to C15 alkyl (meth)acrylates are preferred. Among the high-cut alkyl (meth)acrylates, C16 to C20 alkyl (meth)acrylates are preferred.

According to one embodiment of the present invention, the first copolymer therefore comprises
35 to 60 % by weight monomer units selected from one or more C10 to C15 alkyl (meth)acrylates, preferably 35 to less than 60 %, more preferably 40 to 55 %;
40 to 65 % by weight monomer units selected from one or more C16 to C20 alkyl (meth)acrylates, preferably more than 40 to 65 %, more preferably 45 to 60 %; and
less than 4 % by weight monomer units selected from one or more C1 to C6 alkyl (meth)acrylates, preferably less than 1 %, more preferably zero %.
In this embodiment, the amount of C7 to C15 alkyl (meth)acrylates is restricted to 35 to 60 % by weight, and the amount of C16 to C24 alkyl (meth)acrylates is preferably restricted to 40 to 65 % by weight.

Likewise, the second copolymer preferably comprises
61 to 95 % by weight monomer units selected from one or more C10 to C15 alkyl (meth)acrylates, preferably 70 to 95 %, more preferably 75 to 95 %;
5 to 39 % by weight monomer units selected from one or more C16 to C20 alkyl (meth)acrylates, preferably 5 to 30 %, more preferably 5 to 25 %; and
less than 4 % by weight monomer units selected from one or more C1 to C6 alkyl (meth)acrylates, preferably less than 1 %, more preferably 0 %.
In this embodiment, the amount of C7 to C15 alkyl (meth)acrylates is restricted to 61 to 95 % by weight, and the amount of C16 to C24 alkyl (meth)acrylates is restricted to 5 to 39 % by weight.

Preferably, the first and second copolymers are combined in a weight ratio (first/second) of 5/95 to 75/25, preferably from 10/90 to 60/40 and more preferably from 15/85 to 50/50. In an alternative preferred embodiment, the first and second copolymers are combined in a weight ratio (first/second) of 30/70 to 90/10. Selected copolymers combined in the specified ratios of the present invention offer wider applicability in treatment of base oils from different sources when compared to the use of a single polymer additive or combinations of polymer additives having similar monomeric compositions.

The composition of the present invention comprises 30 to 90 % by weight of the first copolymer and 10 to 70 % by weight of the second copolymer, based on the total weight of the composition. In a preferred embodiment, the composition comprises 30 to 80 % by weight of the first copolymer and 20 to 70 % by weight of the second copolymer, based on the total weight of the composition.

It should be noted that the composition may comprise two or more first or second copolymers, respectively. For instance, the composition might comprise two first copolymers in combination with a single second copolymer, or vice versa. For the purpose of defining the relative amounts of the first and second copolymers, the total weight of all first copolymers should be compared to the total weight of all second copolymers.

A composition comprising two second and one first copolymer is particularly preferred to improve the low-temperature viscosity of engine oil after aging, depending on the formulation of the engine oil.

In another preferred embodiment the composition does not comprise any other alkyl (meth)acrylate copolymers apart from the copolymers of the present invention.

Optionally, other monomers may be polymerized in combination with the alkyl (meth)acrylate monomers discussed above, for example acrylic acid, methacrylic acid, vinyl acetate, styrene, alkyl substituted (meth)acrylamides, monoethylenically unsaturated nitrogen-containing ring compounds, vinyl halides, vinyl nitriles and vinyl ethers. The amount of optional monomer used is typically zero to less than 10%, preferably zero to less than 5% and more preferably zero to less than 2%, based on total weight of monomers used. The optional monomers may be used as long they do not significantly affect the low-temperature properties or the compatibility of the polymer additive with other lubricating oil composition components. The aforementioned discussion on use of optional monomers during the preparation of the alkyl (meth)acrylate polymers is also applicable to the other classes of polymers, such as vinylaromatic polymers, vinylaromatic-(meth)acrylic acid derivative copolymers, vinylaromatic-maleic acid derivative copolymers, vinyl alcohol ester-fumaric acid derivative copolymers, [alpha]-olefin-vinyl alcohol ester copolymers and [alpha]-olefin-maleic acid derivative copolymers.

Suitable monoethylenically unsaturated nitrogen-containing ring compounds include, for example, vinylpyridine, 2-methyl-5-vinylpyridine, 2-ethyl-5-vinylpyridine, 3-methyl-5-vinylpyridine, 2,3-dimethyl-5-vinylpyridine, 2-methyl-3-ethyl-5-vinylpyridine, methyl-substituted quinolines and isoquinolines, 1-vinylimidazole, 2-methyl-1-vinylimidazole, N-vinylcaprolactam, N-vinylbutyrolactam and N-vinylpyrrolidone.

Suitable vinyl halides include, for example, vinyl chloride, vinyl fluoride, vinyl bromide, vinylidene chloride, vinylidene fluoride and vinylidene bromide. Suitable vinyl nitrites include, for example, acrylonitrile and methacrylonitrile.

Well known bulk, emulsion or solution polymerization processes may be used to prepare the alkyl (meth)acrylate polymers useful in the present invention, including batch, semi-batch or semi-continuous methods. Typically, the polymers are prepared by solution (solvent) polymerization by mixing the selected monomers in the presence of a polymerization initiator, a diluent and optionally a chain transfer agent.

Generally, the temperature of the polymerization may be up to the boiling point of the system, for example, from about 60 to 150° C., preferably from 85 to 130° C. and more preferably from 110 to 120° C., although the polymerization can be conducted under pressure if higher temperatures are used. The polymerization (including monomer feed and hold times) is run generally for about 4 to 10 hours, preferably from 2 to 3 hours, or until the desired degree of polymerization has been reached, for example until at least 90%, preferably at least 95% and more preferably at least 97%, of the copolymerizable monomers has been converted to copolymer. As is recognized by those skilled in the art, the time and temperature of the reaction are dependent on the choice of initiator and target molecular weight and can be varied accordingly.

When the polymers are prepared by solvent (non-aqeuous) poymerizations, initiators suitable for use are any of the well-known free-radical-producing compounds such as peroxy, hydroperoxy and azo initiators, including, for example, acetyl peroxide, benzoyl peroxide, lauroyl peroxide, tert-butyl peroxyisobutyrate, caproyl peroxide, cumene hydroperoxide, 1, 1-di(tert-butylperoxy)-3,3,5-trimethylcyclohexane, azobisisobutyronitrile and tert-butyl peroctoate (also known as tert-butylperoxy-2-ethylhexanoate). The initiator concentration is typically between 0.025 and 1%, preferably from 0.05 to 0.5%, more preferably from 0.1 to 0.4% and most preferably from 0.2 to 0.3%, by weight based on the total weight of the monomers. In addition to the initiator, one or more promoters may also be used. Suitable promoters include, for example, quaternary ammonium salts such as benzyl(hydrogenated-tallow)-dimethylammonium chloride and amines. Preferably the promoters are soluble in hydrocarbons. When used, these promoters are present at levels from about 1% to 50%, preferably from about 5% to 25%, based on total weight of initiator. Chain transfer agents may also be added to the polymerization reaction to control the molecular weight of the polymer. The preferred chain transfer agents are alkyl mercaptans such as lauryl mercaptan (also known as dodecyl mercaptan, DDM), and the concentration of chain transfer agent used is from zero to about 2%, preferably from zero to 1%, by weight.

When the polymerization is conducted as a solution polymerization using a solvent other than water, the reaction may be conducted at up to about 100% (where the polymer formed acts as its own solvent) or up to about 70%, preferably from 40 to 60%, by weight of polymerizable monomers based on the total reaction mixture. The solvents can be introduced into the reaction vessel as a heel charge, or can be fed into the reactor either as a separate feed stream or as a diluent for one of the other components being fed into the reactor.

Diluents may be added to the monomer mix or they may be added to the reactor along with the monomer feed. Diluents may also be used to provide a solvent heel, preferably non-reactive, for the polymerization, in which case they are added to the reactor before the monomer and initiator feeds are started to provide an appropriate volume of liquid in the reactor to promote good mixing of the monomer and initiator feeds, particularly in the early part of the polymerization. Preferably, materials selected as diluents should be substantially non-reactive towards the initiators or intermediates in the polymerization to minimize side reactions such as chain transfer and the like. The diluent may also be any polymeric material which acts as a solvent and is otherwise compatible with the monomers and polymerization ingredients being used.

Among the diluents suitable for use in the process of the present invention for nonaqueous solution polymerizations are aromatic hydrocarbons (such as benzene, toluene, xylene and aromatic naphthas), chlorinated hydrocarbons (such as ethylene dichloride, chlorobenzene and dichlorobenzene), esters (such as ethyl propionate or butyl acetate), (C6-C20)aliphatic hydrocarbons (such as cyclohexane, heptane and octane), mineral oils (such as paraffinic and naphthenic oils) or synthetic base oils (such as poly([alpha]-olefin) oligomer (PAO) lubricating oils, for example, [alpha]-decene dimers, trimers and mixtures thereof). When the concentrate is directly blended into a lubricating base oil, the more preferred diluent is any mineral oil, such as 100 to 150 neutral oil (100N or 150N oil), which is compatible with the final lubricating base oil.

In the preparation of lubricating oil additive polymers, the resultant polymer solution, after the polymerization, generally has a polymer content of about 50 to 95% by weight. The polymer can be isolated and used directly in lubricating oil formulations or the polymer-diluent solution can be used in a concentrate form. When used in the concentrate form the polymer concentration can be adjusted to any desirable level with additional diluent. The preferred concentration of polymer in the concentrate is from 30 to 70% by weight and more preferably from 40 to 60%, with the remainder comprising a lubricating oil diluent.

In a second aspect the present invention relates to a lubricating oil composition comprising a base oil, characterized in that the lubricating oil composition further comprises the composition of copolymers described above. According to this aspect of the invention, the composition of copolymers described above is used as an additive to improve the low-temperature viscosity properties of the lubricating oil composition. The lubricating oil composition according to the present invention fulfills the common requirements regarding low-temperature low-shear rate viscosity and yield stress according to ASTM D4684 even after it has been subjected to aging.

Preferably, the lubricating oil composition comprises the additive composition of the present invention in an amount of 0.03 to 3 % by weight, preferably 0.1 to 3 % by weight, more preferably 0.2 to 3 % by weight, most preferably 0.5 to 3 % by weight, based on the total weight of copolymers in the additive composition relative to the total weight of the lubricating oil composition.

The base oil fluids used in formulating the improved lubricating oil compositions of the present invention include, for example, conventional base stocks selected from API (American Petroleum Institute) base stock categories known as Group I, Group II and Group III. The Group I and II base stocks are mineral oil materials (such as paraffinic and naphthenic oils) having a viscosity index (or VI) of less than 120; Group I is further differentiated from Group II in that the latter contains greater than 90% saturated materials and the former contains less than 90% saturated material (that is more than 10% unsaturated material). Group III is considered the highest level of mineral base oil with a VI of greater than or equal to 120 and a saturates level greater than or equal to 90%. Viscosity Index is a measure of the degree of viscosity change as a function of temperature; high VI values indicate a smaller change in viscosity with temperature variation compared to low VI values. Improved lubricating oil compositions of the present invention involve the use of base stocks that are substantially of the API Group I, II and III type; the compositions may optionally contain minor amounts of other types of base stocks.

Preferably the base oil included in the lubricating oil composition of the present invention is therefore selected from the group consisting of API Group I and III base oils.

The lubricating oil compositions provided by the present invention contain from 0.1 to 25 %, preferably from 1 to 15 % and more preferably from 2 to 10 %, based on total lubricating oil composition weight, of one or more auxiliary additives. Representative of these auxiliary additives are those found, for example, in dispersant-inhibitor (DI) packages of additives used by commercial lubricating oil formulators: an antiwear or antioxidant component, such as zinc dialkyl dithiophosphate; a nitrogen-containing ashless dispersant, such as polyisobutene based succinimide; a detergent additive, such as metal phenate or sulfonate; a friction modifier, such as a sulfur-containing organic; extreme pressure additives; corrosion inhibitors; and an antifoam agent, such as silicone fluid. Additional auxiliary additives include, for example, non-dispersant or dispersant viscosity index improvers.

In an embodiment of the present invention, the lubricating oil composition further comprises 0.1 to 25 % by weight, based on the total weight of the lubricating oil composition, auxiliary additives selected from the group consisting of viscosity index improvers, antiwear agents, antioxidants, dispersants, detergents, friction modifiers, antifoam agents, extreme pressure additives, and corrosion inhibitors.

Particularly preferred viscosity index improvers are those selected from the group consisting of alkyl (meth)acrylate polymers, olefin copolymers made of ethylene and propylene (OCPs), and hydrogenated styrene diene "star" polymers. Preferred alkyl (meth)acrylate polymers for use as viscosity index improvers are copolymers comprising 1 to 4 different monomers selected from alkyl methacrylates comprising low-, mid-, and high-cut alkyl methacrylates. Polyalkyl (meth)acrylates (PAMAs) for engine oil use generally have a weight average molecular weight M_{w} of 250000 to 700000 with a polymer distribution of 3 to 4. The OCPs preferably comprise 40 to 60 % by weight ethylene and can be referred to as high and low ethylene copolymers, depending on the ethylene content. Low ethylene OCPs with an ethylene content close to 40 % by weight are typically amorphous, high ethylene OCPs with an ethylene content close to 60 % are crystalline. OCP s for engine oils generally have a weight average molecular weight M_{w} range of 50000 to 200000 g/mol with a polymer distribution of 2 to 2.5. Hydrogenated diene "star" polymers preferably comprise or consist of hydrogenated isoprene units (with 5 to 15 carbon atoms) attached to a divinylbenzene-based core structure. The weight average molecular weight M_{w} of these polymers for use in engine oil are generally 300000 to 700000 g/mol with a polymer distribution of less than 1.5.

In a preferred embodiment, the lubricating oil composition therefore comprises 5 to 15 % by weight, based on the total weight of the lubricating oil composition, of a viscosity index improver selected from the group of alkyl (meth)acrylate polymers, olefin copolymers made of ethylene and propylene (OCPs), and hydrogenated styrene diene "star" polymers.

In a third aspect, the present invention relates to a method of improving the low-temperature viscosity, in particular the low-temperature pumpability, of an aged lubricating oil composition, characterized by the step of adding a composition according to the present invention as an additive to the lubricating oil composition.

For the purpose of this invention, an aged lubricating oil composition is a composition that has undergone an oxidation and/or degradation process. This may occur in particular when the lubricating oil composition has been used in an engine, but may also be the case when the oil has been stored for a period of time. Preferably, an aged lubricating oil composition is a composition that has been used in an engine, in particular a diesel engine, and/or stored for longer than 72 hours, more preferably for longer than 1 week, even more preferably for longer than 6 months, most preferably for longer than 1 year.

Preferably, the aged lubricating oil composition is a used lubricating oil composition. For the purpose of this invention, a used lubricating oil composition is one that has been used in an engine, in particular a diesel engine. This includes lubricating oil compositions that have been aged by their use in an engine.

In a preferred embodiment, the aged lubricating oil composition is characterized by its degree of oxidation and/or degradation and/or the level of contaminants originating from said oxidation and/or said degradation.

Preferably, the method is aimed at improving the low-temperature viscosity of an aged lubricating oil composition, when the lubricating oil composition is aged according to the CEC L-105-12 test.

The CEC L-105-12 test is method to produce an aged oil that has similar characteristics to that has been aged during long-term engine use in the presence of biodiesel. Briefly, the test involves combining 250 g of an oil sample with 5 % by weight biodiesel in a standard glassware vessel. The sample is then aged in the presence of an iron compound catalyst for 72 hours at 150°C and 10 litre/hour of air flow. Oxidizing an oil according to the CEC L-105-12 test can cause pumpability failure either by an increase in the low-shear viscosity or the yield stress, or both. Low-temperature pumpability of the aged oil is determined by the MRV TP-1 test according to ASTM D4684.

In a preferred embodiment, the use of an additive composition according to the present invention has the effect that the aged lubricating oil composition comprising the additive has a low-shear rate viscosity of at most 60 Pa s and a yield stress of less than 35 Pa, according to ASTM D4684. Preferably, this effect is achieved even after aging according to the CEC L-105-12 test.

To achieve its effect, the composition according to the present invention is added to the lubricating oil composition in an amount of 0.03 to 3 % by weight, preferably 0.1 to 3 % by weight, more preferably 0.2 to 3 % by weight, based on the total weight of the lubricating oil composition.

The lubricating oil composition has a composition as described above, and preferably comprises a base oil, and 0.1 to 25 % by weight, based on the total weight of the lubricating oil composition, auxiliary additives selected from the group consisting of viscosity index improvers, antiwear agents, antioxidants, dispersants, detergents, friction modifiers, antifoam agents, extreme pressure additives, and corrosion inhibitors.

In a preferred embodiment, the method further comprises adding 5 to 15 % by weight, based on the total weight of the lubricating oil composition, of a viscosity index improver to the lubricating oil composition, where the viscosity index improver is selected from the group of alkyl (meth)acrylate polymers, olefin copolymers made of ethylene and propylene (OCPs), and hydrogenated styrene diene "star" polymers.

### Examples

Example 1 provides general information for preparing polymers useful in this invention. Example 2 provides information on the untreated formulated oils used it evaluate polymers in the lubricating oil compositions of the present invention. Example 3 summarizes performance data on lubricating oils containing the polymers (Tables 1, 2, 3). All ratios are weight percent unless otherwise noted.

### Example 1:

Alkyl (meth)acrylate copolymers were prepared according to the following method. A reaction mixture consisting of 655.3 g of a monomer composition, 38.4 g of 100 N oil, and 1.57 g n-dodecylmercaptan is charged into a 1000 ml 4 neck round bottom vessel equipped with a stirrer, thermocouple, and nitrogen sweep. Under constant stirring, the mixture is heated to a temperature of 120°C and a total amount of 4.37 g of 30 % active t-butylperoxide is added over the course of 2 hours, while keeping the temperature constant. The reaction mixture is held at 120°C for another 30 minutes, and then diluted with 300.4 g of 100N oil.

The following monomer compositions were used for the preparation of alkyl (meth)acrylate copolymers:

| | |
|---|---|
| LMA | Lauryl Myristyl methacrylate mixture comprising 70 to 80 mol-% C12 methacrylate, 20 to 30 mol-% C14 methacrylate, and less than 1 mol-% C16 |
| SMA | Cetyl-Stearyl methacrylate mixture comprising less than 4 mol-% C14 methacrylate, 26 to 34 mol-% C16 methacrylate, 60 to 70 mol-% C18 methacrylate, and less than 4.5 mol-% C20 methacrylate |
| CEMA | Cetyl-Eicosyl methacrylate mixture comprising less than 2 mol-% C14 methacrylate, 48 to 55 mol-% C16 methacrylate, 26 to 35 mol-% C18 methacrylate, 9 to 16 mol-% C20 methacrylate, and less than 1.5 mol-% C22 or longer methacrylate |
| DPMA | Dodecyl-pentadecyl methacrylate mixture comprising a mixture of C12 to C15 methacrylates comprising 20 % by weight branched alkyl residues and 80 % by weight linear alkyl residues |

Different copolymers were prepared having the monomer compositions according to the following table:

| No. | Monomer composition in wt-% |
|---|---|
| 1 | 94/6 LMA/SMA (second copolymer) |
| 2 | 85/15 LMA/CEMA (second copolymer) |
| 3 | 75/25 LMA/SMA (second copolymer) |
| 4 | 65/35 LMA/SMA (second copolymer) |
| 5 | 58/42 LMA/SMA (first copolymer) |
| 6 | 55/45 LMA/SMA (first copolymer) |
| 7 | 40/60 LMA/SMA (first copolymer) |
| 14 | 67.8/32/0.2 LMA/SMA/DPMA (second copolymer) |

Different copolymer mixtures were prepared according to the following table:

| No. | Copolymer composition in wt-% |
|---|---|
| 8 | 75/25 #3/#6 |
| 9 | 40/60 #4/#6 |
| 10 | 25/75 #2/#6 |
| 11 | 20/80 #1/#5 |
| 12 | 25/75 #1/#7 |
| 13 | 33.3/33.3/33.3 #3/#4/#6 |

PPD Nos. 1-8 and 14 are not according to the invention.

### Example 2:

The properties of untreated formulated oils (without pour point depressant but including DI package and viscosity improver additives) used to evaluate the PPD of the present invention are presented here.

| Formulated Oil | SAE GRADE | 100C, Kinematic Viscosity (mm²/s) | Viscosity Index | DI Pack | Viscosity Modifier | Viscosity Modifier Type |
|---|---|---|---|---|---|---|
| A | 15W-40 | 14.19 | 142 | 1 | 1 | HE OCP |
| B | 5W-30 | | | 2 | 2 | LE OCP |
| C | 10W-40 | 14.93 | 194 | 3 | 3 | PAMA |
| D | 10W-40 | 15.83 | 271 | 3 | 4 | COMB |
| E | 10W-40 | 12.94 | 156 | 3 | 5 | HSD |
| F | 10W-40 | 13.07 | 156 | 3 | 6 | LE OCP |
| G | 10W-40 | 13.34 | 152 | 3 | 7 | HE OCP |
| H | 10W-40 | 13.98 | 185 | 4 | 3 | PAMA |
| I | 10W-40 | 13.59 | 153 | 4 | 6 | LE OCP |
| J | 10W-40 | 13.52 | 143 | 4 | 7 | HE OCP |

The DI packages used are commercially available packages. DI package 1 is produced by Infineum, package 2 is produced by Oronite, package 3 is Infineum P5202, and package 3 is a commercially available package from Oronite (OLOA 4594, see e.g. DE19909401A1).

### DI packages from Infineum:

Passenger car engine oil additives are designed to protect and enhance the performance of engines in cars and light-duty trucks that operate with gasoline, diesel fuel or alternative fuel sources such as ethanol. The Infineum P brand of products can be used to formulate lubricants across the full range of gasoline and light duty diesel engine performance requirements, including the latest American Petroleum Institute (API), Association des Constructeurs Europeens d'Automobiles (ACEA), Japan Automobile Manufacturers Society (JAMA) and original equipment manufacturer (OEM) specifications.

Oils A, and C to J are blends of Group I base oils. Oil B uses a Group III base oil.

PAMA is a commercially available poly alkyl methacrylate sold under the trade name VISCOPLEX® 3-500. COMB is a commercially available viscosity modifier sold under the trade name VISCOPLEX® 3-200. LE OCP is a low ethylene OCP sold under the trade name Paratone® 8235, HE OCP is a high ethylene OCP sold under the trade name Paratone® 8421. HSD is a hydrogenated styrene diene "star" polymer sold under the trade name Shell Vis 261.

### Example 3:

The following tables present data indicative of low temperature pumpability performance for polymeric additive combinations useful in the present invention.

To test the performance of the PPDs in fresh and aged engine oil, a SAE 15W-40 engine oil comprising varying amounts of PPDs was evaluated for MRV TP-1 low-temperature pumpability by measuring the low-shear viscosity (hereafter referred to as apparent viscosity) and yield stress according to ASTM D4684, before and after aging according to the CEC L-105-12 test. The results were considered as a pass if the apparent viscosity was ≤ 60 Pa s, and if the yield stress was < 35 Pa. The results are shown in table 1.

**Table 1: PPD performance according to ASTM D4684 in a SAE 15W-40 engine oil (Oil A) before and after aging according to CEC L-105-12.**

| | | Fresh Oil | | After CEC L-105-12 Ageing | |
|---|---|---|---|---|---|
| PPD No. | PPD treat rate, weight % | -25°C, apparent viscosity (Pa-s) | -25°C, Yield Stress (Pa) | -25°C, apparent viscosity (Pa-s) | -25°C, Yield Stress (Pa) |
| None | None | 252.6 | 175 | - | - |
| 6 | 0.2 | 29.7 | < 35 | 55.5 | 35 |
| 8 | 0.2/1.0* | 77.0 | 105 | solid | - |
| 9 | 0.2 | 20.9 | < 35 | 37.7 | < 35 |
| * fresh oil treat rate/aged oil treat rate | | | | | |

Surprisingly, the use of a PPD composition according to the present invention (PPD 9) maintained the low-temperature pumpability of the engine oil even after aging, whereas the use of a single copolymer (PPD 6) did not.

A similar test was carried out using a SAE 5W-30 engine oil (Oil B) comprising 0.3 % PPD. The results are shown in table 2.

**Table 2: PPD performance according to ASTM D4684 at a concentration of 0.3 % by weight in a SAE 5W-30 engine oil (Oil B) before and after aging according to CEC L-105-12.**

| | | Fresh Oil | | After CEC L-105-12 Ageing | |
|---|---|---|---|---|---|
| PPD No. | PPD treat rate, weight % | -35°C, apparent viscosity (Pa-s) | -35°C, Yield Stress (Pa) | -35°C, apparent viscosity (Pa-s) | -35°C, Yield Stress (Pa) |
| None | None | 35.0 | < 35 | Solid | - |
| 1 | 0.3 | 35.1 | < 35 | solid | - |
| 3 | 0.3 | 32.6 | < 35 | 97.4 | 105 |
| 8 | 0.3 | 28.8 | < 35 | 53.7 | < 35 |
| 10 | 0.3 | 29.8 | < 35 | 51.4 | < 35 |
| 11 | 0.3 | 30.1 | < 35 | 46.9 | < 35 |

A further study was performed using engine oil formulations comprising different viscosity index improvers (VII) and 2 different detergent inhibitor (DI) packages to study the effect of PPDs in combination with other common additives used in engine oil formulations. Five VIIs of different chemical type were selected alongside two DI packages from different suppliers suitable for modern light duty European diesel engine oil standards. All VII and DI package combinations were formulated to SAE10W-40 formulations based on SAE J300 viscometrics using Group I base oils as described in Example 2 above.

The engine oil formulations were supplemented with different PPDs selected from example 1 above. The MRV TP-1 low-temperature pumpability of the PPD-containing formulations was evaluated according to ASTM D4684 before and after CEC L-105-12 aging. The results are shown in table 3.

**Table 3: MRV TP-1 viscosity and yield stress according to ASTM D4684 measured for different SAE 10W-40 Group I engine oil formulations comprising the indicated VIIs, DI packages and PPDs. PPD concentration is given in % by weight based on the total weight of the copolymers relative to the total weight the oil formulation.**

| | | Fresh Oil | | After CEC L-105-12 Ageing | |
|---|---|---|---|---|---|
| PPD No. | PPD treat rate, weight % | -30°C, apparent viscosity (Pa-s) | -30°C, Yield Stress (Pa) | -30°C, apparent viscosity (Pa-s) | -30°C, Yield Stress (Pa) |
| Oil C | | | | | |
| None | None | 24.3 | < 35 | 41.4 | < 35 |
| 3 | 0.2 | 24.9 | < 35 | 40.9 | < 35 |
| 8 | 0.2 | 25.0 | < 35 | 45.5 | < 35 |
| 10 | 0.2 | 26.5 | < 35 | 43.7 | < 35 |
| 12 | 0.2 | 24.4 | < 35 | 43.5 | < 35 |
| | | | | | |

| Oil D | | | | | |
|---|---|---|---|---|---|
| None | None | 17.1 | < 35 | 47.9 | < 35 |
| 3 | 0.2 | 20.8 | < 35 | 32.0 | < 35 |
| 8 | 0.2 | 22.3 | < 35 | 40.0 | < 35 |
| 10 | 0.2 | 23.0 | < 35 | 40.7 | < 35 |
| 12 | 0.2 | 20.1 | < 35 | 35.0 | < 35 |
| | | | | | |

| Oil E | | | | | |
|---|---|---|---|---|---|
| None | None | 28.7 | < 35 | Solid | - |
| 3 | 0.2 | 39.5 | < 35 | 36.6 | < 35 |
| 12 | 0.2 | 33.2 | < 35 | 40.0 | < 35 |
| | | | | | |

| Oil F | | | | | |
|---|---|---|---|---|---|
| None | None | 35.2 | < 35 | Solid | - |
| 3 | 0.2 | 61.7 | 105 | Solid | - |
| 8 | 0.2 | 40.0 | < 35 | 46.8 | < 35 |
| 10 | 0.2 | 45.3 | < 35 | 46.1 | < 35 |
| 12 | 0.2 | 40.3 | < 35 | 56.3 | 70 |
| | | | | | |

| Oil G | | | | | |
|---|---|---|---|---|---|
| None | None | - | - | Solid | - |
| 3 | 0.2 | 105.0 | 280 | Solid | - |
| 3 | 0.5 | - | - | Solid | - |
| 6 | 0.5 | 27.3 | < 35 | Solid | - |
| 8 | 0.2 | 35.5 | 70 | Solid | - |
| 10 | 0.2 | 20.5 | < 35 | 84.4 | 140 |
| 12 | 0.2 | 19.4 | < 35 | 64.8 | 140 |
| 13 | 0.3 | 22.9 | < 35 | 58.1 | < 105 |
| 13 | 0.5 | 21.7 | < 35 | 44.0 | < 35 |
| 14 | 0.5 | 26.6 | < 35 | 65.8 | < 175 |
| | | | | | |

| Oil H | | | | | |
|---|---|---|---|---|---|
| None | None | 63.8 | 140 | 43.7 | 35 |
| 3 | 0.2 | 29.7 | < 35 | 37.0 | < 35 |
| 8 | 0.2 | 23.1 | < 35 | 37.5 | < 35 |
| 10 | 0.2 | 22.6 | < 35 | 38.5 | < 35 |
| 12 | 0.2 | 21.5 | < 35 | 37.6 | < 35 |
| | | | | | |

| Oil I | | | | | |
|---|---|---|---|---|---|
| None | 0 | 83.4 | 35 | 113.6 | 140 |
| 3 | 0.2 | 50.4 | < 35 | 139.7 | 210 |
| 8 | 0.2 | 44.2 | < 35 | 49.9 | < 35 |
| 10 | 0.2 | 54.2 | < 35 | 52.0 | 35 |
| 12 | 0.2 | 61.1 | 35 | 57.4 | 35 |
| 13 | 0.2 | 58.3 | < 35 | 46.2 | < 70 |
| 13 | 0.3 | - | - | 49.1 | < 35 |
| | | | | | |

| Oil J | | | | | |
|---|---|---|---|---|---|
| None | None | 44.1 | < 35 | 97.1 | 140 |
| 3 | 0.2 | Solid | - | Solid | - |
| 6 | 0.5 | 47.1 | < 35 | 71.0 | 70 |
| 8 | 0.2 | 42.1 | < 35 | 104.6 | 140 |
| 10 | 0.2 | 32.9 | < 35 | 57.1 | 70 |
| 10 | 0.45 | - | - | 42.2 | < 35 |
| 11 | 0.4 | - | - | 40.7 | < 35 |
| 12 | 0.2 | 32.9 | < 35 | 57.1 | 70 |

In the lubricating oils based on olefin copolymer, it is clear that PPDs of one polymer composition are not able to maintain the low temperature pumpability of the engine oil. It is only when polymer combinations are employed as described in this invention that passing results are achieved in both fresh and CEC L-105-12 aged oil. In some cases, higher treat rates of PPD are needed to achieve an aged oil passing result than required for the fresh oil. It was found that the use of PPDs according to the present invention maintains low-temperature pumpability of engine oil formulations comprising PAMA, COMB and HSD as VII and both DI packages even after CEC L-105-12 aging. Adding PPD does not harm the good performance of engine oils that pass the low temperature pumpability requirement. In contrast, PPDs comprising only single copolymers, such as PPDs No. 3 and 14, did not maintain low-temperature pumpability in all of the tested oils (e.g. oils G, I, and J).

The present invention therefore provides PPD compositions that can be used to improve the low-temperature viscosity of a range of engine oil formulations, something that has not been achieved by the PPDs described in the art. The PPD compositions of the present invention are particularly useful to improve the viscosity properties in cases where conventional PPDs do not provide any improvement. The present invention therefore allows the skilled person to select a suitable PPD composition for each given oil formulation, thereby expanding the range of engine oil formulations suitable for use as engine oils.

It should be noted that a wide variety of options exist for formulating engine oils in the choice of base stock Group type, DI package and viscosity modifier type. It is known and accepted that each individual choice and the combination of choices can affect the selection of the PPD. For example, different DI packages from the same supplier will have different effects on the viscosity of a given oil formulation. The same is true for DI packages from different suppliers. It is important to note that although the choice of components determines the viscosity of the formulation, the viscosity can still be improved regardless of the choice of components by proper PPD selection as described in this invention. Hence, suitable combinations of PPD compositions and oil formulations can be found by a skilled person following the testing procedures described in the above examples.

## Claims

1. A composition for use as a lubricating oil additive comprising two alkyl (meth)acrylate copolymers, **characterized in that** the composition comprises 30 to 90 % by weight of the first copolymer and 10 to 70 % by weight of the second copolymer, based on the total weight of the composition, and
a) the first copolymer comprises
i) 35 to 60 % by weight, based on the total weight of the copolymer, monomer units selected from one or more C7 to C15 alkyl (meth)acrylates, and
ii) less than 4 % by weight, based on the total weight of the copolymer, monomer units selected from one or more C1 to C6 alkyl (meth)acrylates; and
b) the second copolymer comprises
i) more than 60 to 95 % by weight, based on the total weight of the copolymer, monomer units selected from one or more C7 to C15 alkyl (meth)acrylates,
ii) at least 5 % by weight, based on the total weight of the copolymer, monomer units selected from one or more C16 to C24 alkyl (meth)acrylates, and
iii) less than 4 % by weight, based on the total weight of the copolymer, monomer units selected from one or more C1 to C6 alkyl (meth)acrylates.

2. The composition according to claim 1, **characterized in that** the first copolymer further comprises 40 to 65 % by weight, based on the total weight of the copolymer, monomer units selected from one or more C16 to C24 alkyl (meth)acrylates.

3. The composition according to claim 1, **characterized in that** the second copolymer comprises
i) 61 to 95 % by weight, based on the total weight of the copolymer, monomer units selected from one or more C7 to C15 alkyl (meth)acrylates,
ii) 5 to 39 % by weight, based on the total weight of the copolymer, monomer units selected from one or more C16 to C24 alkyl (meth)acrylates, and
iii) less than 4 % by weight, based on the total weight of the copolymer, monomer units selected from one or more C1 to C6 alkyl (meth)acrylates.

4. The composition according to claim 1, **characterized in that** the first copolymer comprises
i) 35 to 60 % by weight, based on the total weight of the copolymer, monomer units selected from one or more C10 to C15 alkyl (meth)acrylates,
ii) 40 to 65 % by weight, based on the total weight of the copolymer, monomer units selected from one or more C16 to C20 alkyl (meth)acrylates, and
iii) less than 4 % by weight, based on the total weight of the copolymer, monomer units selected from one or more C1 to C6 alkyl (meth)acrylates.

5. The composition according to claim 1, **characterized in that** the second copolymer comprises
i) 61 to 95 % by weight, based on the total weight of the copolymer, monomer units selected from one or more C10 to C15 alkyl (meth)acrylates,
ii) 5 to 39 % by weight, based on the total weight of the copolymer, monomer units selected from one or more C16 to C20 alkyl (meth)acrylates, and
iii) less than 4 % by weight, based on the total weight of the copolymer, monomer units selected from one or more C1 to C6 alkyl (meth)acrylates.

6. The composition according to claim 1, **characterized in that** the composition comprises 30 to 80 % by weight of the first copolymer and 20 to 70 % by weight of the second copolymer.

7. The composition according to claim 1, wherein the C7 to C15 alkyl (meth)acrylates are selected from the group consisting of dodecyl-pentadecyl methacrylate (DPMA), decyl-octyl methacrylate (DOMA), nonyl-undecyl methacrylate (NUMA), and lauryl-myristyl methacrylate (LMA); and wherein the C16 to C24 alkyl (meth)acrylates are selected from the group consisting of cetyl-eicosyl methacrylate (CEMA), and cetyl-stearyl methacrylate (SMA).

8. A lubricating oil composition comprising a base oil, **characterized in that** the lubricating oil composition further comprises the composition according to any one of claims 1 to 7.

9. The lubricating oil composition according to claim 8, **characterized in that** the lubricating oil composition comprises the composition according to any one of claims 1 to 7 in an amount of 0.03 to 3 % by weight, based on the total weight of copolymers in the composition relative to the total weight of the lubricating oil composition.

10. The lubricating oil composition according to claim 8, **characterized in that** the base oil is selected from the group consisting of API Group I, II and III base oils.

11. The lubricating oil composition according to claim 8, further comprising 0.1 to 20 % by weight, based on the total weight of the lubricating oil composition, of viscosity index improvers selected from the group of alkyl (meth)acrylate polymers, olefin copolymers made of ethylene and propylene, and hydrogenated styrene diene "star" polymers.

12. Method of improving the low-temperature viscosity of an aged lubricating oil composition, the method comprising a step of adding a composition according to claims 1 to 7 as an additive to the lubricating oil composition, wherein
the aged lubricating oil composition is one that has been used in an engine, in particular in a diesel engine.

13. The method according to claim 12, **characterized in that** the aged lubricating oil composition comprising the additive has a low-shear rate viscosity of at most 60 Pa s and a yield stress of less than 35 Pa, according to ASTM D4684.

14. The method according to claim 12, further comprising adding 5 to 15 % by weight, based on the total weight of the lubricating oil composition, of a viscosity index improver to the lubricating oil composition, where the viscosity index improver is selected from the group of alkyl (meth)acrylate polymers, olefin copolymers made of ethylene and propylene, and hydrogenated styrene diene "star" polymers.

## Patentansprüche

1. Zusammensetzung zur Verwendung als Schmiermitteladditiv, umfassend zwei Alkyl(meth)acrylat-Copolymere, **dadurch gekennzeichnet, dass** die Zusammensetzung 30 bis 90 Gew.-% des ersten Copolymers und 10 bis 70 Gew.-% des zweiten Copolymers, bezogen auf das Gesamtgewicht der Zusammensetzung, umfasst und
a) das erste Copolymer
i) 35 bis 60 Gew.-%, bezogen auf das Gesamtgewicht des Copolymers, Monomereinheiten, die aus einem oder mehreren C7- bis C15-Alkyl(meth)acrylaten ausgewählt sind, und
ii) weniger als 4 Gew.-%, bezogen auf das Gesamtgewicht des Copolymers, Monomereinheiten, die aus einem oder mehreren C1- bis C6-Alkyl(meth)acrylaten ausgewählt sind,
umfasst und
b) das zweite Copolymer
i) mehr als 60 bis 95 Gew.-%, bezogen auf das Gesamtgewicht des Copolymers, Monomereinheiten, die aus einem oder mehreren C7- bis C15-Alkyl(meth)-acrylaten ausgewählt sind,
ii) mindestens 5 Gew.-%, bezogen auf das Gesamtgewicht des Copolymers, Monomereinheiten, die aus einem oder mehreren C16- bis C24-Alkyl(meth)acrylaten ausgewählt sind, und
iii) weniger als 4 Gew.-%, bezogen auf das Gesamtgewicht des Copolymers, Monomereinheiten, die aus einem oder mehreren C1- bis C6-Alkyl(meth)acrylaten ausgewählt sind,
umfasst.

2. Zusammensetzung nach Anspruch 1, **dadurch gekennzeichnet, dass** das erste Copolymer ferner 40 bis 65 Gew.-%, bezogen auf das Gesamtgewicht des Copolymers, Monomereinheiten, die aus einem oder mehreren C16- bis C24-Alkyl(meth)acrylaten ausgewählt sind, umfasst.

3. Zusammensetzung nach Anspruch 1, **dadurch gekennzeichnet, dass** das zweite Copolymer
i) 61 bis 95 Gew.-%, bezogen auf das Gesamtgewicht des Copolymers, Monomereinheiten, die aus einem oder mehreren C7- bis C15-Alkyl(meth)acrylaten ausgewählt sind,
ii) 5 bis 39 Gew.-%, bezogen auf das Gesamtgewicht des Copolymers, Monomereinheiten, die aus einem oder mehreren C16- bis C24-Alkyl(meth)acrylaten ausgewählt sind, und
iii) weniger als 4 Gew.-%, bezogen auf das Gesamtgewicht des Copolymers, Monomereinheiten, die aus einem oder mehreren C1- bis C6-Alkyl(meth)acrylaten ausgewählt sind,
umfasst.

4. Zusammensetzung nach Anspruch 1, **dadurch gekennzeichnet, dass** das erste Copolymer
i) 35 bis 60 Gew.-%, bezogen auf das Gesamtgewicht des Copolymers, Monomereinheiten, die aus einem oder mehreren C10- bis C15-Alkyl(meth)acrylaten ausgewählt sind,
ii) 40 bis 65 Gew.-%, bezogen auf das Gesamtgewicht des Copolymers, Monomereinheiten, die aus einem oder mehreren C16- bis C20-Alkyl(meth)acrylaten ausgewählt sind, und
iii) weniger als 4 Gew.-%, bezogen auf das Gesamtgewicht des Copolymers, Monomereinheiten, die aus einem oder mehreren C1- bis C6-Alkyl(meth)acrylaten ausgewählt sind,
umfasst.

5. Zusammensetzung nach Anspruch 1, **dadurch gekennzeichnet, dass** das zweite Copolymer
i) 61 bis 95 Gew.-%, bezogen auf das Gesamtgewicht des Copolymers, Monomereinheiten, die aus einem oder mehreren C10- bis C15-Alkyl(meth)acrylaten ausgewählt sind,
ii) 5 bis 39 Gew.-%, bezogen auf das Gesamtgewicht des Copolymers, Monomereinheiten, die aus einem oder mehreren C16- bis C20-Alkyl(meth)acrylaten ausgewählt sind, und
iii) weniger als 4 Gew.-%, bezogen auf das Gesamtgewicht des Copolymers, Monomereinheiten, die aus einem oder mehreren C1- bis C6-Alkyl(meth)acrylaten ausgewählt sind,
umfasst.

6. Zusammensetzung nach Anspruch 1, **dadurch gekennzeichnet, dass** die Zusammensetzung 30 bis 80 Gew.-% des ersten Copolymers und 20 bis 70 Gew.-% des zweiten Copolymers umfasst.

7. Zusammensetzung nach Anspruch 1, wobei die C7- bis C15-Alkyl(meth)acrylate aus der Gruppe bestehend aus Dodecyl-Pentadecylmethacrylat (DPMA), Decyl-Octylmethacrylat (DOMA), Nonyl-Undecylmethacrylat (NUMA) und Lauryl-Myristylmethacrylat (LMA) ausgewählt sind und wobei die C16- bis C24-Alkyl(meth)acrylate aus der Gruppe bestehend aus Cetyl-Eicosylmethacrylat (CEMA) und Cetyl-Stearylmethacrylat (SMA) ausgewählt sind.

8. Schmierölzusammensetzung, umfassend ein Grundöl, **dadurch gekennzeichnet, dass** die Schmierölzusammensetzung ferner die Zusammensetzung nach einem der Ansprüche 1 bis 7 umfasst.

9. Schmierölzusammensetzung nach Anspruch 8, **dadurch gekennzeichnet, dass** die Schmierölzusammensetzung die Zusammensetzung nach einem der Ansprüche 1 bis 7 in einer Menge von 0,03 bis 3 Gew.-%, basierend auf dem Gesamtgewicht von Copolymeren in der Zusammensetzung, bezogen auf das Gesamtgewicht der Schmierölzusammensetzung, umfasst.

10. Schmierölzusammensetzung nach Anspruch 8, **dadurch gekennzeichnet, dass** das Grundöl aus der Gruppe bestehend aus Grundölen der API-Gruppe I, II und III ausgewählt ist.

11. Schmierölzusammensetzung nach Anspruch 8, ferner umfassend 0,1 bis 20 Gew.-%, bezogen auf das Gesamtgewicht der Schmierölzusammensetzung, von Viskositätsindexverbesserern, die aus der Gruppe von Alkyl(meth)acrylat-Polymeren, Olefin-Copolymeren aus Ethylen und Propylen und hydrierten Styrol-Dien-Sternpolymeren ausgewählt sind.

12. Verfahren zur Verbesserung der Tieftemperaturviskosität einer gealterten Schmierölzusammensetzung, wobei das Verfahren einen Schritt des Zugebens einer Zusammensetzung nach einem der Ansprüche 1 bis 7 als Additiv zu der Schmierölzusammensetzung umfasst, wobei
es sich bei der gealterten Schmierölzusammensetzung um eine handelt, die in einem Motor, insbesondere in einem Dieselmotor, verwendet wurde.

13. Verfahren nach Anspruch 12, **dadurch gekennzeichnet, dass** die gealterte Schmierölzusammensetzung, die das Additiv umfasst, eine Viskosität bei niedriger Scherrate von höchstens 60 Pa s und eine Fließgrenze von weniger als 35 Pa gemäß ASTM D4684 aufweist.

14. Verfahren nach Anspruch 12, ferner umfassend das Zugeben von 5 bis 15 Gew.-%, bezogen auf das Gesamtgewicht der Schmierölzusammensetzung, eines Viskositätsindexverbesserers zu der Schmierölzusammensetzung, wobei der Viskositätsindexverbesserer aus der Gruppe von Alkyl-(meth)acrylat-Polymeren, Olefin-Copolymeren aus Ethylen und Propylen und hydrierten Styrol-Dien-Sternpolymern ausgewählt wird.

## Revendications

1. Composition destinée à être utilisée en tant qu'additif d'huile lubrifiante comprenant deux copolymères de (méth)acrylate d'alkyle, **caractérisée en ce que** la composition comprend 30 à 90 % en poids du premier copolymère et 10 à 70 % en poids du second copolymère, sur la base du poids total de la composition, et
a) le premier copolymère comprend
i) 35 à 60 % en poids, sur la base du poids total du copolymère, de motifs monomères choisis parmi un ou plusieurs (méth)acrylates d'alkyle en C7 à C15 et
ii) moins de 4 % en poids, sur la base du poids total du copolymère, de motifs monomères choisis parmi un ou plusieurs (méth)acrylates d'alkyle en C1 à C6 ; et
b) le second copolymère comprend
i) de plus de 60 à 95 % en poids, sur la base du poids total du copolymère, de motifs monomères choisis parmi un ou plusieurs (méth)acrylates d'alkyle en C7 à C15,
ii) au moins 5 % en poids, sur la base du poids total du copolymère, de motifs monomères choisis parmi un ou plusieurs (méth)acrylates d'alkyle en C16 à C24 et
iii) moins de 4 % en poids, sur la base du poids total du copolymère, de motifs monomères choisis parmi un ou plusieurs (méth)acrylates d'alkyle en C1 à C6.

2. Composition selon la revendication 1, **caractérisée en ce que** le premier copolymère comprend en outre 40 à 65 % en poids, sur la base du poids total du copolymère, de motifs monomères choisis parmi un ou plusieurs (méth)acrylates d'alkyle en C16 à C24.

3. Composition selon la revendication 1, **caractérisée en ce que** le second copolymère comprend
i) 61 à 95 % en poids, sur la base du poids total du copolymère, de motifs monomères choisis parmi un ou plusieurs (méth)acrylates d'alkyle en C7 à C15,
ii) 5 à 39 % en poids, sur la base du poids total du copolymère, de motifs monomères choisis parmi un ou plusieurs (méth)acrylates d'alkyle en C16 à C24 et
iii) moins de 4 % en poids, sur la base du poids total du copolymère, de motifs monomères choisis parmi un ou plusieurs (méth)acrylates d'alkyle en C1 à C6.

4. Composition selon la revendication 1, **caractérisée en ce que** le premier copolymère comprend
i) 35 à 60 % en poids, sur la base du poids total du copolymère, de motifs monomères choisis parmi un ou plusieurs (méth)acrylates d'alkyle en C10 à C15,
ii) 40 à 65 % en poids, sur la base du poids total du copolymère, de motifs monomères choisis parmi un ou plusieurs (méth)acrylates d'alkyle en C16 à C20 et
iii) moins de 4 % en poids, sur la base du poids total du copolymère, de motifs monomères choisis parmi un ou plusieurs (méth)acrylates d'alkyle en C1 à C6.

5. Composition selon la revendication 1, **caractérisée en ce que** le second copolymère comprend
i) 61 à 95 % en poids, sur la base du poids total du copolymère, de motifs monomères choisis parmi un ou plusieurs (méth)acrylates d'alkyle en C10 à C15,
ii) 5 à 39 % en poids, sur la base du poids total du copolymère, de motifs monomères choisis parmi un ou plusieurs (méth)acrylates d'alkyle en C16 à C20 et
iii) moins de 4 % en poids, sur la base du poids total du copolymère, de motifs monomères choisis parmi un ou plusieurs (méth)acrylates d'alkyle en C1 à C6.

6. Composition selon la revendication 1, **caractérisée en ce que** la composition comprend 30 à 80 % en poids du premier copolymère et 20 à 70 % en poids du second copolymère.

7. Composition selon la revendication 1, dans laquelle les (méth)acrylates d'alkyle en C7 à C15 sont choisis dans le groupe constitué par le méthacrylate de dodécyle/pentadécyle (DPMA), le méthacrylate de décyle/octyle (DOMA), le méthacrylate de nonyle/undécyle (NUMA) et le méthacrylate de lauryle/myristyle (LMA) ; et dans laquelle les (méth)acrylates d'alkyle en C16 à C24 sont choisis dans le groupe constitué par le méthacrylate de cétyle/éicosyle (CEMA) et le méthacrylate de cétyle/stéaryle (SMA).

8. Composition d'huile lubrifiante comprenant une huile de base, **caractérisée en ce que** la composition d'huile lubrifiante comprend en outre la composition selon l'une quelconque des revendications 1 à 7.

9. Composition d'huile lubrifiante selon la revendication 8, **caractérisée en ce que** la composition d'huile lubrifiante comprend la composition selon l'une quelconque des revendications 1 à 7 en une quantité de 0,03 à 3 % en poids, sur la base du poids total de copolymères présents dans la composition par rapport au poids total de la composition d'huile lubrifiante.

10. Composition d'huile lubrifiante selon la revendication 8, **caractérisée en ce que** l'huile de base est choisie dans le groupe constitué par les huiles de base des groupes API I, II et III.

11. Composition d'huile lubrifiante selon la revendication 8, comprenant en outre 0,1 à 20 % en poids, sur la base du poids total de la composition d'huile lubrifiante, d'agents améliorant l'indice de viscosité choisis dans le groupe des polymères de (méth)acrylate d'alkyle, des copolymères d'oléfines constitués d'éthylène et de propylène et des polymères « en étoile » de styrène-diène hydrogénés.

12. Procédé d'amélioration de la viscosité à basse température d'une composition d'huile lubrifiante vieillie, le procédé comprenant une étape consistant à ajouter une composition selon les revendications 1 à 7 en tant qu'additif à la composition d'huile lubrifiante, dans lequel
la composition d'huile lubrifiante vieillie en est une qui a été utilisée dans un moteur, en particulier dans un moteur diesel.

13. Procédé selon la revendication 12, **caractérisé en ce que** la composition d'huile lubrifiante vieillie comprenant l'additif a une viscosité à un faible taux de cisaillement d'au maximum 60 Pa·s et une limite apparente d'élasticité inférieure à 35 Pa, selon la méthode ASTM D4684.

14. Procédé selon la revendication 12, comprenant en outre l'ajout de 5 à 15 % en poids, sur la base du poids total de la composition d'huile lubrifiante, d'un agent améliorant l'indice de viscosité à la composition d'huile lubrifiante, l'agent améliorant l'indice de viscosité étant choisi dans le groupe des polymères de (méth)acrylate d'alkyle, des copolymères d'oléfines constitués d'éthylène et de propylène et des polymères « en étoile » de styrène-diène hydrogénés.
